(19) **Europäisches Patentamt / European Patent Office / Office européen des brevets**

(11) **EP 1 509 002 B1**

(12) **EUROPEAN PATENT SPECIFICATION**

(45) Date of publication and mention
of the grant of the patent:
**24.10.2007 Bulletin 2007/43**

(51) Int Cl.:
*H04L 12/28* (2006.01)     *H04L 12/46* (2006.01)

(21) Application number: **04010475.4**

(22) Date of filing: **03.05.2004**

(54) **RF Coverage extension for wireless home networking systems**

Erweiterung des Radiofrequenzabdeckungsbereiches für ein drahtloses Heimnetzwerksystem

Extension de la couverture de radio fréquence pour un système de réseau doméstique sans fil

(84) Designated Contracting States:
**DE FI FR GB IT NL**

(30) Priority: **19.08.2003 EP 03018874**

(43) Date of publication of application:
**23.02.2005 Bulletin 2005/08**

(73) Proprietor: **Sony Deutschland GmbH**
**10785 Berlin (DE)**

(72) Inventors:
• **Stadelmeier, Lothar, Stuttgart Techn. Center**
**70327 Stuttgart (DE)**
• **Dawidowsky, Frank, Stuttgart Techn. Center**
**70327 Stuttgart (DE)**

(74) Representative: **Rupp, Christian**
**Mitscherlich & Partner**
**Patent- und Rechtsanwälte**
**Sonnenstrasse 33**
**80331 München (DE)**

(56) References cited:
EP-A- 1 133 129     WO-A-03/028313
US-A- 5 784 573

• TANNENBAUM, ANDEW .S: "COMPUTER NETWORKS" PENNTICE-HALL INTERNATIONAL, INC., 1996, pages 262-265, 275-299, 304-318, XP002264074 Upper Saddle River, New Jersey ISBN: 0-13-394248-1
• MINASSIAN G: "HOME PHONE LINE NETWORKS: THE NEXT NETWORKING CHALLENGE" ELECTRONIC PRODUCT DESIGN, IML PUBLICATION, GB, vol. 19, no. 11, November 1998 (1998-11), pages C15-C16,C18,C21, XP000981685 ISSN: 0263-1474

**Description**

FIELD AND BACKGROUND OF THE INVENTION

The present invention generally relates to the field of wireless LANs. It particularly refers to a method for operating a heterogeneous home networking system which is constituted by a number of wired and/or wireless LANs connected to a backbone infrastructure (e.g. Powerline). E.g. Ethernet and/or wireless cluster can thus be connected via the backbone media.

Traditional wireless home-networking technology is typically deployed in the scope of line-of-sight, infrared, unidirectional, hand-held controller applications, e.g. for remotely controlling video cassette recorders, television sets, home security or alarm systems. Another obvious wireless technology applies to cordless phone systems. However, neither of these systems can definitively be classified as a robust home network element.

The broadest definition of home networking is any technology or service that makes it possible to connect home appliances to each other or automate them. A more specific definition includes linking computers, peripherals and consumer electronic devices used within a user's home to form a connected environment. Home networking has also been described as a collection of elements that process, manage, transport, and store information, enabling the connection and integration of multiple computing, control, monitoring, and communication devices within the user's home.

BRIEF DESCRIPTION OF THE PRESENT STATE OF THE ART

There are two primary methods for establishing a home network: wired and wireless. Wireless technologies e.g. include Wi-Fi (IEEE 802.11b, 802.11a and 802.11g), HiperLAN2 and HomeRF (IEEE 802.11). As most homeowners would favor no new cables versus installing new cables, wireless home networking tends to be the most preferred technology. However, it is also the most expensive technology and can be unreliable at times. On the other hand, wired home networking technologies, which, inter alia, include Ethernet, HomePNA (on telephone lines) and HomePlug (powerline communication system), tend to be favored in newly constructed homes since they are generally more reliable and require less expensive components. Many recent periodicals argue HomePNA to be the ideal home networking technology, yet closer examination of each technology's features, components, costs, security, suppliers, advantages and disadvantages indicates this may not be the case, especially with the expansion of broadband technology and the increasing number of multi-computer homes. To understand the proposed idea of the present invention, it is necessary to briefly describe the main features, advantages and drawbacks of commonly used wired and wireless home networking technologies according to the state of the art.

Ethernet, which is based on the IEEE 802.3 and IEEE 802.5 networking standards, operates at 10 Mbps to 100 Mbps within a range of 150 meters. They can be as simple as two computers with network interface cards interconnected with a cable or as complex as multiple routers, bridges and hubs connecting many diverse network appliances. A 1-Mbps network is suitable for sharing Internet connections and some printing. However, it is not preferred for large file transfers, multi-player gaming or multimedia applications. As demand for voice and data transmission increases, the amount of bandwidth required to convey these signals also increases.

An Ethernet network deploys CAT5 cabling to carry signals between interconnected network components. Data transmission is based on the CSMA/CD protocol, which allows for network devices to automatically sense the activity on the network line, transmit when the path is clear and resend a data packet if a collision with another packet is detected. There are components available which assist with routing data on the network. Network components are typically connected to a hub or switch that controls traffic on the network by passing along the signal. If a user wants to connect all devices on the network without regards to security or access, then he/she can use a peer-to-peer architecture with a hub.

Since an Ethernet home network runs on special cabling and connectors, it is the most secure of all home network technologies. A router can be added between the high-speed modem and the network to "hide" it from the outside Internet. Many home network routers incorporate firewalls that can be configured for added security. Since the network is self-contained, a person would have to physically connect to it in order to get any information.

HomePlug Powerline Alliance (HomePlug) involves running a network over conventional home electrical wiring and works by plugging a gateway adapter into a regular wall outlet. The adapter thereby encrypts the data before transmitting it over the powerlines by using a standard 56-bit DES encryption. A HomePlug network transfers data at a transmission speed between 8 and 14 Mbps and is compatible with other wireless and HomePNA networks. It has the longest range of any home networking technology, which can reach up to 750 meters. Typically, HomePlug networks are able to connect up to 256 devices within a 450 m$^2$ home.

Wireless home network technologies which are in use today include Wi-Fi (IEEE 802.11b, 802.11a and 802.11g), HiperLAN2, HomeRF, IrDA, and Bluetooth. These technologies are ideal for dedicated purposes such as device communication and control. However, IrDA requires line of sight, and Bluetooth has a limit range of 10 meters or closer, which makes these technologies unfavorable for a home network infrastructure. Consequently, the following section is only focused on Wi-Fi and HomeRF wireless technologies.

Wi-Fi, which stands for "wireless fidelity", is the ideal technology for a user who wishes not to install new wires in his/her home. It uses the 2.4-GHz frequency band, the same frequency used by cell and cordless phones, employs a frequency-shift key (FSK) technology known as Direct-Sequence Spread Spectrum (DSSS) and has a range of 75-120 meters in closed areas and 300 meters in open areas. Depending on the respectively underlying IEEE standard, wireless transmission speeds can vary between 2 Mbps (IEEE 802.11) and 54 Mbps (IEEE 802.11a).

HomeRF was the first practical wireless home networking technology and came out in the mid of 2000. HomeRF stands for Home Radio Frequency, which uses radio frequencies to transmit data over ranges of 22.5 to 37.5 meters. It is the ideal technology for a user that can not afford the costs of the more expensive Wi-Fi components, yet wishes to share files, print services and stream MP3 music within his/her home. HomeRF uses a type of spread spectrum technology which was initially developed by the military. This technology transmits signals using the 2.4-GHz frequency band and employs a frequency-shift key (FSK) technology known as Frequency Hopping Spread Spectrum (FHSS). Moreover, HomeRF is based on the Shared Wireless Access Protocol (SWAP) - a hybrid standard developed by IEEE 802.11. SWAP can connect up to 127 network devices and transmits at speeds up to 2 Mbps. HomeRF applies the same frequency band and technology which is used by cellular and cordless phones, yet there is little to no interference. Since most HomeRF networks are peer-to-peer networks, they do not require access points.

Document US 5784573 discloses a local area network controller in which a common physical connector is used for two different IEEE 802.x standards.

## PROBLEMS OF PRIOR-ART SOLUTIONS

Conventional wireless home networking technologies such as Bluetooth or HomeRF, that enable consumers to wirelessly access information from their home network via radio links at any time and anywhere, often suffer from limited bandwidths and face low data throughput and scalability limitations. These limitations become significant as the demand for multimedia home entertainment networks increases. It can be shown that a single coordinating wireless access point is often not enough to cover a typical home network, in particular within solid European houses. Existing solutions covering a whole building hence require an allocation of multiple RF channels, which are a rare resource.

Heterogeneous home networking architectures consisting of different media types (wired, wireless and powerline) are complex systems. These media types typically require different standalone media access control (MAC) layers. Bridging between these media usually takes place at a high layer of the underlying OSI protocol stack (e.g. the TCP/IP layer), which consumes more processing power and decreases the overall throughput.

## OBJECT OF THE PRESENT INVENTION

In view of the explanations mentioned above, it is the primary object of the present invention to propose a method for extending the RF coverage area of a heterogeneous networking system.

Further on, the processing power needed for bridging between different types of media interconnected via said home networking system should be decreased. The overall throughput should be increased.

This object is achieved by means of the features of the independent claims. Advantageous features are defined in the subordinate claims. Further objects and advantages of the invention are apparent in the detailed description which follows.

## SUMMARY OF THE INVENTION

The proposed approach of the present invention is basically dedicated to a method for extending the RF coverage area of a heterogeneous home networking system which is constituted by a number of wired (e.g. Ethernet) and/or wireless local area networks (WLANs) connected to a backbone that comprises a number of bridges to wired clusters and wireless-to-wired backbone bridges.

In contrast to conventional solutions according to the state of the art, the present invention combines home network media elements of different multimedia data types interconnected by said home networking system on different RF/PHY layers and enables a simple extension of the RF coverage without the need of new frequency resources or any loss of bandwidth.

## BRIEF DESCRIPTION OF THE DRAWINGS

Further advantages and conceivable applications of the present invention result from the subordinate claims as well as from the following description of one embodiment of the invention as depicted in the following drawings:

Fig. 1a    shows an example for a heterogeneous home networking system installed within a building which is constituted by a number of wired and/or wireless LANs connected to a backbone network, the home networking system comprising a number of wired and wireless terminals interconnected via said wired backbone network,

Fig. 1b    shows a logical network structure for the home networking system,

Fig. 2    shows an analog frontend architecture for the modulator/demodulator stage of a wireless RF transceiver, wherein the same MAC layer is used for the overall network such that the respective IF signal of an RF signal transmitted via an allocated RF transmission channel of a wireless local area network is used on the backbone media and on said wireless local area network,

Fig. 3    shows an analog front-end architecture of a wireless RF transceiver with a PHY-layer conversion stage, wherein the same MAC layer but different PHY layers are used on the backbone media and on said wireless local area network,

Fig. 4    shows the structure of an OFDM message being composed of OFDM symbols and inserted guard intervals,

Fig. 5    shows an embodiment of the present invention including a PHY-layer conversion stage and two physical layers, and

Fig. 6    shows the structure and the signal delays of an OFDM message when using the OFDM technique in the embodiment of Fig. 5.

DETAILED DESCRIPTION OF THE PRESENT INVENTION

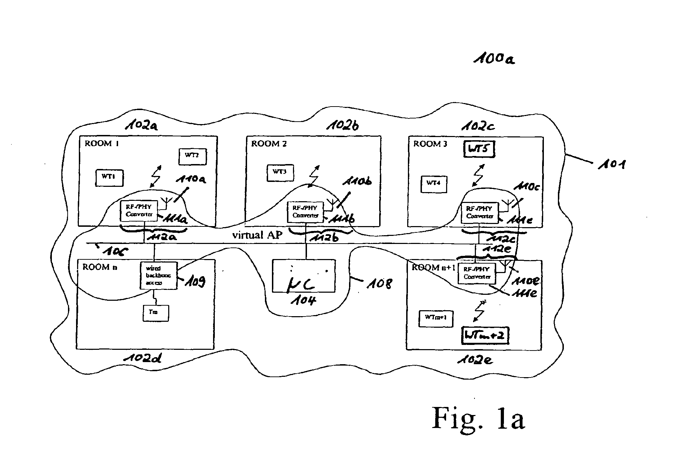

In the following, one embodiment of the present invention as depicted in Figs. 1a to 3 shall be explained in detail. The meaning of the symbols designated with reference numerals and signs in these figures can be taken from an annexed table.

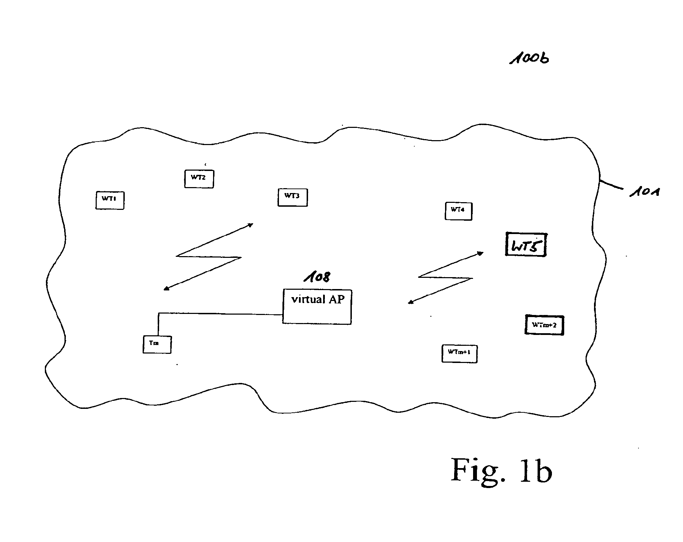

As depicted in Figs. 1a+b, a backbone network 106 having a controlling instance 104 acts as a virtual access point 108 (AP), and several RF/PHY converters 111a-e are applied to interconnect a number of distributed wireless (WT$_1$, WT$_2$, WT$_3$, WT$_4$, WT$_5$, WT$_{m+1}$, and WT$_{m+2}$) and/or wired terminals (T$_m$) via this virtual access point 108. Each of these RF/PHY converters 111a-e thereby serves a relatively small area (e.g. a single room 102a-e of a networked building). Together with the associated wired or wireless terminals the virtual AP 108 builds one overall home networking system 100a which can easily be extended by adding new RF/PHY converters to the backbone network 106.

If the backbone network 106 uses an OFDM technique, multipath reception is constructively overlaid at the receiver as long as the different signals arrive within a defined interval (the so-called guard interval). Therefore, the virtual access point 108 can receive and transmit at different locations (e.g. antennas in different rooms) although the transmitted signals will have different propagation lengths on the backbone media.

Therefore each media using OFDM is preferred for the backbone network according to the present invention. Examples are:

- Powerline Communications
- 5 GHZ WLAN systems (802.11a, HiperLAN2)
- 2.4 GHZ WLAN systems (802.11g)

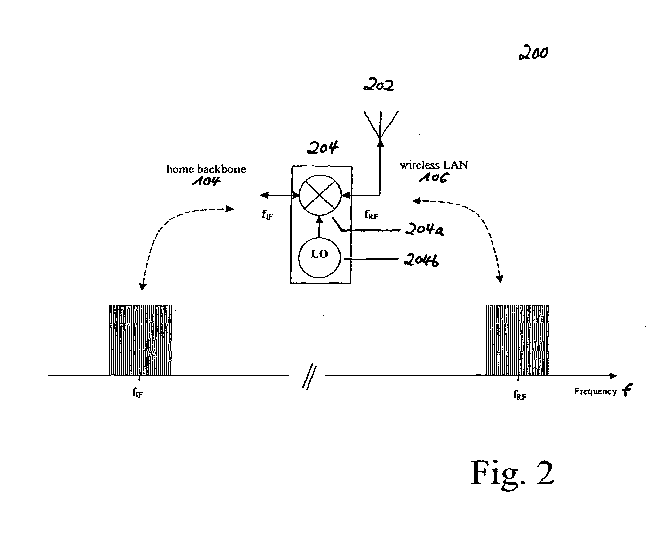

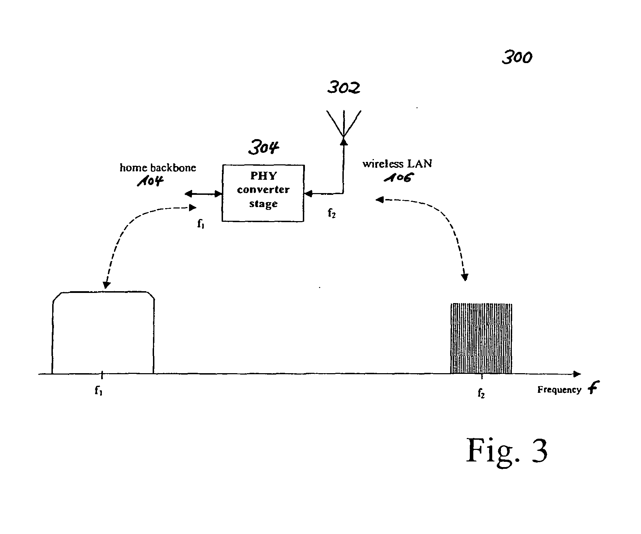

Depending on the harmonization between the backbone media and the wireless local area networks 102a,b, c,e, two scenarios for interconnecting distributed wireless terminals (WT$_1$, WT$_2$, WT$_3$, WT$_4$, WT$_{m+1}$, WT$_{m+2}$) and wired communication devices (T$_m$) to a home networking system 100a as depicted in Figs. 2 and 3 can be considered:

- If the corresponding IF signal of an RF signal to be transmitted or received via an allocated RF transmission channel of a wireless LAN 102a,b,c,e is used on the media of the backbone network 106, a conventional wireless RF transceiver with an analog frontend architecture comprising a modulator/demodulator 204 with a single up-/down-conversion stage 204a and a local oscillator 204b can be used for interconnecting said distributed wireless (WT$_1$, WT$_2$, WT$_3$, WT$_4$, WT$_5$, WT$_{m+1}$, and WT$_{m+2}$) and wired terminals (T$_m$) via the virtual access point 108 to form a home networking system 100a. This solution is e.g. applicable for home networking systems where a Powerline communication system serves as home network backbone 106. In this case, the IF spectrum of an RF signal received via an allocated RF transmission channel of a wireless LAN 102a,b,c,e is used on the mains. Thereby, the same MAC layer is used for the overall network, which consists of the wireless LANs 102a,b,c,e and the backbone network 106, such that the respective IF signal of an RF signal transmitted via an said RF transmission channel is used on the backbone media and on the respective wireless LANs 102,a,b,c,e.

- In case a PHY-layer signal on said RF transmission channel can not properly be mapped to a signal on the backbone network 106, a PHY-layer bridging procedure is proposed. In this scenario, the same MAC layer but different PHY layers are used on the backbone media and on the respective wireless local area network 102a,b,c,e. Thereby, a wireless RF transceiver comprising a PHY-layer conversion stage needed for converting the digital RF signal at the center frequency f1 into the other modulation scheme at the center frequency f2 or vice versa is introduced to guarantee best possible data transmission on both media types. The PHY-layer conversion procedure (S5) thereby comprises the steps of receiving (S5a) an RF signal from a wireless local area network 102a,b,c,e, allocating (S5b) a backbone medium, converting (S5c) the RF signal from one digital modulation to another, and transmitting (S5d) the obtained RF signal via the allocated backbone medium. By contrast, the inverse PHY-layer conversion procedure (S5') is characterized by the steps of receiving (S5a') a digital signal from a backbone, allocating (S5b') a single RF transmission channel of a wireless local area network 102a,b,c,e through a wireless PHY converting stage 112a-e, converting (S5c') the signal from one modulation scheme to the other and transmitting (S5d') the obtained RF signal via the allocated RF transmission channel.

Note that both digital modulation schemes may use bands in the RF range rather than converting to the IF range as proposed in the first embodiment.

Independent of the respective scenario, the present invention allows the usage of one common MAC layer that is controlled by a central backbone controller 104 which allows most simple integration of all possible home network media elements. Said backbone network 106 thereby appears to the outside world as a single all-controlling instance. Other media types can be connected to the backbone network 106 by using a special device with a protocol stack having an appropriate convergence layer on top, which acts as a terminal within the backbone network 106.

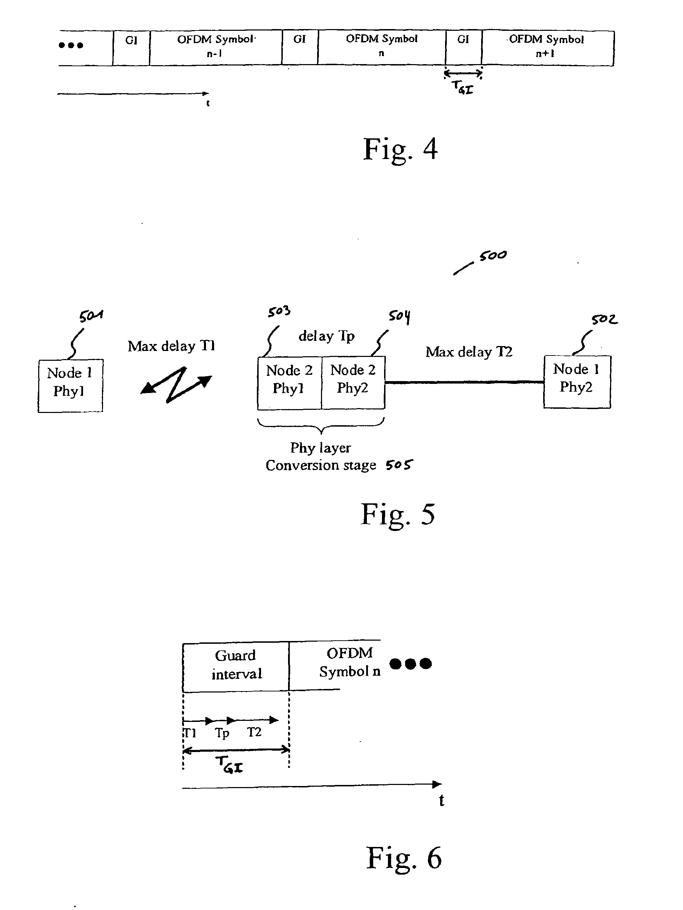

To explain how the virtual access point 108 can receive and transmit at different locations using the OFDM multiplex technique, the main features of OFDM are now briefly discussed. As depicted in Fig. 4, an OFDM message is composed of successive symbols (..., n-1, n, n+1, ...) that are separated by so-called Guard Intervals (GI). An important advantage of OFDM systems over other multiplex systems is that they show very good performance in case of multipath reception. One reason for that improved behavior is the introduction of Guard Intervals in the multiplexed message. According to the theory, the duration $T_{GI}$ of a Guard Interval has to be greater than the longest echo length of the propagation path. A direct consequence, called feature F0, is that all different signal paths that cause phase steps in the signal at their arriving time are available at the receiver before the end of the Guard Interval. In other words, the receiver has got all the signals carrying a symbol n and being transmitted over different paths before the reception of the next symbol n+1. All signal paths that arrive at the receiver during the Guard Interval are therefore constructively overlaid and contribute without interference to the receiving signal.

The present invention uses said feature F0 by extending the Guard Interval for more than one physical layer.

Fig. 5 depicts an embodiment of heterogeneous home networking system 500 according to the present invention including a physical layer conversion stage 505 and two physical layers Phy1 and Phy2.

The signal transmitted between a node 1 501 and a node 2 503 of the first physical layer Phy1 uses at least one transmission path and possibly several transmission paths in case of e.g. a wireless backbone access node. The duration T1 is the maximal delay path of the physical layer Phy1, that means the longest transmission duration, between the node 1 501 and the node 2 503. Similarly, The duration T2 is the maximal delay path of the second physical layer Phy2 between a node 1 502 and a node 2 504.

The nodes 2 503, 504 of both physical layers Phy1 and Phy2 constitute the PHY-layer conversion stage 505. $T_P$ is the delay at the PHY-layer conversion stage 505.

Fig. 6 shows the structure and the delays of an OFDM message when using the OFDM technique in the heterogeneous home networking system 500 presented in Fig. 5. The present invention makes use of the above detailed feature F0 of OFDM according to which all signals that carry a symbol n over a multitude of paths are received before the end of the Guard Interval following said symbol n, i.e. before the reception of the next symbol n+1. That is ensured if the duration of the Guard Interval $T_{GI}$ is greater than the longest delay path.

In the case of the embodiment of Fig. 5, feature F0 is ensured if the overall delay consisting of:

- the longest signal path at physical layer Phy1 T1,
- the processing time at the physical layer conversion stage 505 $T_P$, and
- the longest signal path at physical layer Phy2 T2

is superior to the smallest Guard Interval of both physical layers Phy1 and Phy2. The heterogeneous home networking system 500 can then be handled as one overall system from the MAC layer point of view.

If the overall runtime of a signal from the sending node 501 of the first physical layer Phy1 over the physical layer conversion stage 505 to the destination node 502 of the second physical layer Phy2 does not exceed the duration of the Guard Interval of the OFDM signal, i.e. if the following equation is respected:

$$T_{GI} > T1 + T_P + T2 \qquad (Eq. 1)$$

then the heterogeneous networking system 100a can be viewed as a common system from the MAC layer point of view.

Thus, although the wired 102d and wireless 102a,b,c,e LANs constituting the network 100a present different OFDM based physical layers, the heterogeneous network 100a is able to use a common MAC layer for all wired 102d and wireless 102a,b,c,e LANs. The conversion of the signal to the common protocol takes place in the wired 109 and wireless 111a,b,c,e backbone access nodes, e.g. in the physical layer conversion stage 505.

**Table: Depicted Features and their Corresponding Reference Signs**

| No. | Technical Feature (System Component or Procedure Step) |
|---|---|
| 100a | home networking system which is constituted by a number of wired (102d) and wireless LANs (102a,b,c,e) connected to a backbone network 106, said home networking system 100a comprising a number of wireless terminals $WT_1$, $WT_2$, $WT_3$, $WT_4$, $WT_5$, $WT_{m+1}$, $WT_{m+2}$ and one wired communication device $T_m$ interconnected via a virtual access point (AP) |
| 100b | logical network structure for the home networking system 100a |
| 101 | coverage area of a home network environment with interconnected wireless ($WT_1$, $WT_2$, $WT_3$, $WT_4$, $WT_5$, $WT_{m+1}$, and $WT_{m+2}$) and wired communication devices ($T_m$) |
| 102a | room #1 of a networked building in the coverage area of a wireless home networking system 100a, wherein two wireless terminals ($WT_1$ and $WT_2$) are connected to a backbone network 106 via a first RF/PHY converter stage 111a |
| 102b | room #2 of the networked building in the coverage area 101 of the wireless home networking system 100a, wherein one wireless terminal ($WT_3$) is connected to the backbone network 106 via a second RF/PHY converter stage 111b |
| 102c | room #3 of the networked building in the coverage area of the wireless home networking system 100a, wherein two wireless terminals ($WT_4$ and $WT_5$) are connected to the backbone network 106 via a third RF/PHY converter stage 111c |
| 102d | room #$n$ of the networked building in the coverage area of the wireless home networking system 100a, wherein one wired communication device $T_m$ is connected to the backbone network LAN 106 via a wired backbone access node 109 |
| 102e | room #($n$+1) of the networked building in the coverage area of the wireless home networking system 100a, wherein two wireless terminals $WT_{m+1}$ and $WT_{m+2}$ are connected to the backbone network 106 via a fourth RF/PHY converter stage 111e |
| 104 | controlling instance of the network system, connected to the backbone network 106 |
| 106 | backbone network interconnecting a number of wireless (111a-e) and/or wired backbone access nodes (109) of the home networking system 100a |
| 108 | virtual access point, consisting of the backbone network 106 and a number of interconnected wireless (111a-e) and/or wired backbone access nodes (109) |
| 109 | wired backbone access node, which connects the wired communication device $T_m$ located in room #$n$ to the backbone network 106 |
| 110a | Tx/Rx antenna of a first wireless RF transceiver 112a |
| 110b | Tx/Rx antenna of a second wireless RF transceiver 112b |
| 110c | Tx/Rx antenna of a third wireless RF transceiver 112c |
| 110e | Tx/Rx antenna of a fourth wireless RF transceiver 112e |

(continued)

| No. | Technical Feature (System Component or Procedure Step) |
|---|---|
| 111a | RF/PHY converter stage of the first wireless RF transceiver 112a, which connects the wireless terminals $WT_1$ and $WT_2$ located in room #1 to the backbone network 106 |
| 111b | RF/PHY converter stage of the second wireless RF transceiver 112b, which connects the wireless terminal $WT_3$ located in room #2 to the backbone network 106 |
| 111c | RF/PHY converter stage of the third wireless RF transceiver 112c, which connects the wireless terminals $WT_4$ and $WT_5$ located in room #3 to the backbone network 106 |
| 111e | RF/PHY converter stage of the fourth wireless RF transceiver 112e, which connects the wireless terminals $WT_{m+1}$ and $WT_{m+2}$ located in room #(n+1) to the backbone network 06 |
| 112a | first wireless RF transceiver 112a, located in room #1 of the networked building |
| 112b | second wireless RF transceiver 112b, located in room #2 of the networked building |
| 112c | third wireless RF transceiver 112c, located in room #3 of the networked building |
| 112d | fourth wireless RF transceiver 112d, located in room #($n$+1) of the networked building |
| 200 | analog frontend architecture for the combined modulator/demodulator stage of a wireless RF transceiver needed for a down-conversion of an RF signal received via an allocated RF transmission channel of a wireless local area network 102a,b,c,e from an RF band to an intermediate frequency (IF) band or an up-conversion of an IF signal to be transmitted from the IF band to an RF band, wherein the same MAC layer is used for the overall network such that the respective IF signal of an RF signal transmitted via an allocated RF transmission channel of a wireless local area network 102a,b,c,e is used on the backbone media and on the wired backbone network 106 |
| 202 | Tx/Rx antenna of the wireless RF transceiver |
| 204 | modulator/demodulator stage of the wireless RF transceiver |
| 204a | up-/down-conversion mixer of the modulator/demodulator stage 204 |
| 204b | local oscillator of the modulator/demodulator stage, which provides an approximately sinusoidal oscillator signal |
| 300 | analog frontend architecture of a wireless RF transceiver with a PHY-layer conversion stage needed for a PHY-layer conversion of an RF signal received via an allocated RF transmission channel of a wireless local area network 102a,b,c,e from an RF band at a center frequency $f_2$ to another center frequency $f_1$ or vice-versa, wherein the same MAC layer but different PHY layers are used on the backbone media and on the wireless local area networks 102a,b,c,e |
| 302 | Tx/Rx antenna of the wireless RF transceiver |
| 304 | PHY-layer conversion stage of the wireless RF transceiver |
| 500 | heterogeneous home networking system |
| 501 | node 1 of a first physical layer Phy1, considered as sending node |
| 502 | node 1 of a second physical layer Phy2, considered as destination node |
| 503 | node 2 of a first physical layer Phy1 that is part of a physical layer conversion stage 505 |
| 504 | node 2 of a second physical layer Phy2 that is part of a physical layer conversion stage 505 |
| 505 | physical layer conversion stage |

(continued)

| No. | Technical Feature (System Component or Procedure Step) |
|---|---|
| μC | central backbone controlling instance (μC) of the backbone network 106, which controls the common media access control (MAC) layer |
| S0a | step #0a: allocating a number of wired and/or wireless transmission channels |
| S0b | step #S0b: bridging between home network media elements of different multimedia data types on allocated transmission channels at a predefined layer of the underlying protocol stack |
| S1 | step #1: using a common media access control (MAC) layer for the entire home networking system 100a needed for accessing different backbone media of the wired backbone network 106 |
| S2 | step #2: accessing backbone media of the backbone network 106 |
| S2' | step #2': integrating home network media elements of different multimedia data types interconnected by said home networking system 100a |
| S3 | step #3: using different physical (PHY) layers on the backbone media and on the wireless local area networks 102a,b,c,e |
| S4 | step #4: mapping the PHY-layer representation of an RF signal transmitted via an allocated RF transmission channel of a wireless local area network 102a,b,c,e to an IF signal on a backbone medium of the wired backbone network 106 |
| S5 | step #5: PHY-layer conversion procedure |
| S5' | step #5': inverse PHY-layer conversion procedure |
| S5a | step #5a: receiving an RF signal from a wireless local area network 102a,b,c,e |
| S5b | step #5b: allocating a backbone medium connected to the backbone network 106 |
| S5c | step #5c: down-converting the RF signal from an RF band to a corresponding IF band |
| S5d | step #5d: transmitting the obtained IF signal via the allocated backbone medium |
| S5a' | step #5a': receiving an IF signal from a backbone medium connected to the backbone network 106 |
| S5b' | step #5b': allocating a single RF transmission channel of a wireless local area network 102a,b,c,e connected to the wired Ethernet LAN 106 via a wireless access point 112a-e |
| S5c' | step #5c': up-converting the IF signal from the IF band to a corresponding RF band |
| S5d' | step #5d': transmitting the obtained RF signal via the allocated RF transmission channel |

**Claims**

1. A method for operating a heterogeneous OFDM-based networking system (100a), which comprises wired (102d) and/or wireless LANs (102a,b,c,e) connected to a virtual access point (108) which comprises a backbone network (106), a controlling instance (104), wired-to-backbone bridges (109) and/or wireless-to-backbone bridges (112a-e) to the backbone network (106),

   wherein the wired-to-backbone bridges (109) and/or wireless-to-backbone bridges (112a-e) respectively comprise RF/PHY converter stages (111a-e) respectively converting from a first physical layer (PHY1) to a second physical layer (PHY2),

   wherein the guard interval of the OFDM system is set as being larger than the time necessary for one converter stage and the maximum total delay between two nodes of the OFDM-based networking system (100a), and

   wherein a single common media access control (MAC) layer is used for the heterogeneous networking system (100a) needed for accessing (S2) different media of backbone network (106) and integrating (S2') network media elements of different multimedia data types interconnected by said networking system (100a).

2. A method according to claim 1,
   **characterized by**
   a PHY-layer conversion procedure (S5) comprising the steps of
   receiving (S5a) an RF signal from a wireless LAN (102a,b,c,e),
   allocating (S5b) a backbone medium connected to the backbone network (106),
   down-converting (S5c) the RF signal from an RF band to a corresponding IF band, and
   transmitting (S5d) the obtained IF signal via the allocated backbone medium.

3. A method according to claim 1 or 2,
   **characterized by**
   an inverse PHY-layer conversion procedure (S5') comprising the steps of
   receiving (S5a') a digital signal from a backbone, allocating (S5b') a single RF transmission channel of a wireless LAN (102a,b,c,e) connected to the wired backbone network(106) through a wireless-to-backbone bridge (112a-e),
   converting (S5c') the signal from the physical layer on the backbone media to a corresponding modulated signal in the RF band, and
   transmitting (S5d') the obtained RF signal via the allocated RF transmission channel.

4. A method according to anyone of the claims 1 to 3,
   **characterized in that**
   the common media access control (MAC) layer is controlled by a central backbone controlling instance (104) of the wired backbone network (106).

5. A heterogeneous OFDM-based networking system (100a), which comprises wired (102d) and/or wireless LANs (102a,b,c,e) connected to a virtual access point (108) which comprises a backbone network (106), a controlling instance (104), wired-to-backbone bridges (109) and/or wireless-to-backbone bridges (112a-e) to the backbone network (106),
   wherein the wired-to-backbone bridges (109) and/or wireless-to-backbone bridges (112a-e) respectively comprise RF/PHY converter stages (111a-e) respectively converting from a first physical layer (PHY1) to a second physical layer (PHY2),
   wherein the guard interval of the OFDM system is-set as being larger than the time necessary for one converter stage and the maximum total delay between two nodes of the OFDM-based networking system (100a), and
   wherein a single common media access control (MAC) layer is used for the heterogeneous networking system (100a) needed for accessing (S2) different media of backbone network (106) and integrating (S2') network media elements of different multimedia data types interconnected by said networking system (100a).

6. A heterogeneous OFDM-based networking system according to claim 5,
   **characterized in that**
   each wireless-to-backbone bridge (112a,b,c,e) comprises a PHY-layer conversion stage (304) for mapping the PHY-layer representation of an RF signal transmitted via a wireless local area network (102a,b,c,e) to a signal on a backbone medium.

7. A heterogeneous OFDM-based networking system according to anyone of the claims 5 or 6,
   **characterized in that**
   the backbone network (106) and its controlling instance (104) is a powerline communication system which is designed to use the IF spectrum of an RF signal received via an allocated RF transmission channel of a wireless local area network (102a,b,c,e).

**Patentansprüche**

1. Verfahren zum Betreiben eines heterogenen OFDM-basierten Netzwerksystems (100a), welches verdrahtete (102d) und/oder drahtlose LAN's (102a, b, c, e) umfasst, die an einem virtuellen Zugangspunkt (108) angeschlossen sind, der ein Backbone-Netzwerk (106), eine Steuerinstanz (104), Verdrahtet-zu-backbone-Brücken (109) und/oder drahtlos-zu-backbone-Brücken (112a-e) zu dem Backbone-Netzwerk (106) umfasst,
   wobei die Verdrahtet-zu-backbone-Brücken (109) und/oder drahtlos-zu-backbone-Brücken (112a-e) jeweils die zugehörigen RF/PHY-Konvertierungsstufen (111a-e) aufweisen, die jeweils von einer ersten physikalischen Schicht (PHY1) zu einer zweiten physikalischen Schicht (PHY2) konvertieren,
wobei das Guard-Interval des OFDM-Systems größer gesetzt ist als die für eine Konvertierungsstufe erforderliche Zeit und die maximale Gesamtverzögerung zwischen zwei Knoten des OFDM-basierten Netzwerksystems (100a), und

wobei eine einzelne gemeinsame Medien-Zugangssteuerung-Schicht (MAC) für das heterogene Netzwerksystem (100a) benutzt ist, welches für den Zugang (S2) zu verschieden Medien des Backbone-Netzwerks (106) und die Einbindung (S2') von Netzwerkmedienelementen verschiedener Multimedia-Datentypen, die durch das Netzwerksystem (100a) verbunden sind, erforderlich ist.

2.  Verfahren nach Anspruch 1,
    **gekennzeichnet durch**
    eine PHY-Schicht-Konvertierungsprozedur (S5), die die Schritte umfasst Empfangen (S5a) eines RF-Signals von einem drahtlosen LAN (102a, b, c, e), Zuteilen (S5b) eines mit dem Backbone-Netzwerk (106) verbundenen Backbone-Mediums,
    Down-Konvertieren (S5c) des RF-Signals eines RF-Bands zu einem zugehörigen IF-Band, und
    Übermitteln (S5d) des erhaltenen IF-Signals mittels des zugeteilten Backbone-Mediums.

3.  Verfahren nach Anspruch 1 oder 2,
    **gekennzeichnet durch**
    eine inverse PHY-Schicht-Konvertierungsprozedur (S5), die die Schritte umfasst Empfangen (S5a') eines digitalen Signals von einem Bachbone,
    Zuteilen (S5b') eines einzelnen RF-Übertragungskanals eines drahtlosen LAN's (102a, b, c, e), das mit dem verkabelten Backbone-Netzwerk (106) mittels einer Kabellos-zu-backbone-Brücke (112a-e) verbunden ist,
    Konvertieren (S5c') des Signals von der physikalischen Schicht des Backbone-Mediums zu einem zugehörenden modulierten Signal in dem RF-Band, und Übermitteln (S5d') des erhaltenen RF-Signals über den zugeteilten RF-Übermittlungskanal.

4.  Verfahren nach einem der Ansprüche 1 bis 3,
    **dadurch gekennzeichnet, dass**
    die gemeinsame Medien-Zugangssteuerung (MAC) Schicht durch eine zentrale Backbone-Steuerinstanz (104) des Backbone-Netzwerks (106) gesteuert ist.

5.  Heterogenes OFDM-basiertes Netzwerksystem (100a), welches verdrahtete (102d) und/oder drahtlose LAN's (102a, b, c, e) umfasst, die an einem virtuellen Zugangspunkt (108) angeschlossen sind, der ein Backbone-Netzwerk (106), eine Steuerinstanz (104), Verdrahtet-zu-backbone-Brücken (109) und/oder drahtlos-zu-backbone-Brücken (112a-e) zu dem Backbone-Netzwerk (106) umfasst,
    wobei die Verdrahtet-zu-backbone-Brücken (109) und/oder Kabellos-zu-backbone-Brücken (112a-e) entsprechend die zugehörigen RF/PHY-Konvertierungsstufen (111a-e) umfassen, die entsprechend von einer ersten physikalischen Schicht (PHY1) zu einer zweiten physikalischen Schicht (PHY2) konvertieren,
    wobei das Sicherheitsintervall des OFDM-Systems größer gesetzt ist, als die für eine Konvertierungsstufe erforderliche Zeit und die maximale Gesamtverzögerung zwischen zwei Knoten des OFDM-basierten Netzwerksystems (100a), und
    wobei eine einzelne gemeinsame Medien-Zugangssteuerung-Schicht (MAC) für das heterogene Netzwerksystem (100a) benutzt ist, welches für den Zugang (S2) zu verschieden Medien des Backbone-Netzwerks (106) und die Einbindung (S2') von Netzwerkmedienelementen verschiedener Multimedia-Datentypen, die durch das Netzwerksystem (100a) verbunden sind, erforderlich ist.

6.  Heterogenes OFDM-basiertes Netzwerksystem nach Anspruch 5,
    **dadurch gekennzeichnet, dass**
    jede drahtlos-zu-backbone-Brücke (112a, b, c, e) eine PHY-Schicht-Konvertierungsstufe (304) für die Anbindung der PHY-Schicht-Darstellung eines über ein kabelloses, lokales Bereichs-LAN (102a, b, c, e) übermittelten RF-Signals an ein Signal des Backbone-Mediums umfasst.

7.  Heterogenes OFDM-basiertes Netzwerksystem nach einem der Ansprüche 5 oder 6,
    **dadurch gekennzeichnet, dass**
    das Backbone-Netzwerk (106) und seine Steuerinstanz (104) ein Leistungskommunikations-System ist, welches ausgelegt ist das IF-Spektrum eines mittels eines zugeteilten RF-Übermittlungskanals empfangenen RF-Signals des kabellosen, lokalen Bereichs-LAN's (102a, b, c, e) zu nutzen.

**Revendications**

1. Procédé d'exploitation d'un système de fonctionnement en réseau hétérogène basé OFDM (100a), qui comprend des LAN à liaison par fil (102d) et/ou à liaison sans fil (102a, b, c, e) connectés à un point d'accès virtuel (108) qui comprend un réseau fédérateur (106), une instance de contrôle (104), des ponts à liaison par fil avec le réseau fédérateur (109) et/ou des ponts à liaison sans fil avec le réseau fédérateur (112a à e) reliés au réseau fédérateur (106) ;

   dans lequel les ponts à liaison par fil avec le réseau fédérateur (109) et/ou les ponts à liaison sans fil avec le réseau fédérateur (112a à e) comprennent respectivement des étages de conversion RF/PHY (111a à e) qui exécutent une conversion depuis une première couche physique (PHY1) à une deuxième couche physique (PHY2), respectivement ;

   dans lequel l'intervalle de garde du système OFDM est défini comme étant plus grand que le temps nécessaire à un étage de conversion et le retard total maximum entre deux noeuds du système de fonctionnement en réseau basé OFDM (100a) ; et

   dans lequel une couche commune unique de contrôle d'accès au support (couche MAC) est utilisée pour le système de fonctionnement en réseau hétérogène (100a) qui est nécessaire pour accéder (S2) à différents supports de réseau fédérateur (106) et pour intégrer (S2') des éléments supports de réseau de différents types de données multimédia reliés entre eux par ledit système de fonctionnement en réseau (100a).

2. Procédé selon la revendication 1,
   **caractérisé par**
   une procédure de conversion de couche PHY (S5), comprenant les étapes consistant à :

   recevoir (S5a) un signal RF en provenance d'un LAN à liaison sans fil (102a, b, c, e);
   attribuer (S5b) un support de réseau fédérateur relié au réseau fédérateur (106) ;
   convertir à la baisse (S5c) le signal RF, depuis une bande RF à une bande FI correspondante ; et
   transmettre (S5d) le signal FI obtenu par le biais du support de réseau fédérateur attribué.

3. Procédé selon la revendication 1 ou 2,
   **caractérisé par**
   une procédure de conversion de couche PHY inverse (55'), comprenant les étapes consistant à :

   recevoir (S5a') un signal numérique en provenance d'un réseau fédérateur ;
   attribuer (S5b') un canal de transmission RF unique d'un LAN à liaison sans fil (102a, b, c, e) relié au réseau fédérateur à liaison par fil (106) par le biais d'un pont à liaison sans fil avec le réseau fédérateur (112a à e) ;
   convertir (S5c') le signal depuis la couche physique sur le support de réseau fédérateur en un signal modulé correspondant dans la bande RF ; et
   transmettre (S5d) le signal RF obtenu par le biais du canal de transmission RF attribué.

4. Procédé selon l'une quelconque des revendications 1 à 3, **caractérisé en ce que** :

   la couche commune de contrôle d'accès au support (couche MAC) est contrôlée par une instance de contrôleur de réseau fédérateur centrale (104) du réseau fédérateur à liaison par fil (106) .

5. Système de fonctionnement en réseau hétérogène basé OFDM (100a), qui comprend des LAN à liaison par fil (102d) et/ou à liaison sans fil (102a, b, c, e) connectés à un point d'accès virtuel (108) qui comprend un réseau fédérateur (106), une instance de contrôle (104), des ponts à liaison par fil avec le réseau fédérateur (109) et/ou des ponts à liaison sans fil avec le réseau fédérateur (112a à e) reliés au réseau fédérateur (106) ;

   dans lequel les ponts à liaison par fil avec le réseau fédérateur (109) et/ou les ponts à liaison sans fil avec le réseau fédérateur (112a à e) comprennent respectivement des étages de conversion RF/PHY (111a à e) qui exécutent une conversion depuis une première couche physique (PHY1) à une deuxième couche physique (PHY2), respectivement ;

   dans lequel l'intervalle de garde du système OFDM est défini comme étant plus grand que le temps nécessaire à un étage de conversion et le retard total maximum entre deux noeuds du système de fonctionnement en réseau basé OFDM (100a) ; et

   dans lequel une couche commune unique de contrôle d'accès au support (couche MAC) est utilisée pour le système de fonctionnement en réseau hétérogène (100a) qui est nécessaire pour accéder (S2) à différents supports de réseau fédérateur (106) et pour intégrer (S2') des éléments supports de réseau de différents types de données multimédia reliés entre eux par ledit système de fonctionnement en réseau (100a).

6. Système de fonctionnement en réseau hétérogène basé OFDM selon la revendication 5, **caractérisé en ce que**
chaque pont à liaison sans fil avec le réseau fédérateur (112a, b, c, e) comprend un étage de conversion de couche PHY (304) pour mettre en correspondance la représentation de couche PHY d'un signal RF transmis par le biais d'un réseau local sans fil (102a, b, c, e) avec un signal sur un support de réseau fédérateur.

7. Système de fonctionnement en réseau hétérogène basé OFDM selon l'une quelconque des revendications 5 ou 6, **caractérisé en ce que**
le réseau fédérateur (106) et son instance de contrôle (104) sont un système de courants porteurs en ligne qui est adapté pour utiliser le spectre FI d'un signal RF reçu par le biais d'un canal de transmission RF attribué d'un réseau local sans fil (102a, b, c, e).

Fig. 1a

Fig. 1b

Fig. 2

*300*

*302*

*304*

home backbone
*104*

PHY
converter
stage

wireless LAN
*106*

$f_1$

$f_2$

$f_1$

$f_2$

Frequency $f$

## Fig. 3

| ••• | GI | OFDM Symbol n-1 | GI | OFDM Symbol n | GI | OFDM Symbol n+1 |
|---|---|---|---|---|---|---|

$T_{GI}$

t

# Fig. 4

500

Node 1 Phy1 — 501

Max delay T1

delay Tp — 503 ... 504

Node 2 Phy1 | Node 2 Phy2 — 503 504

Max delay T2

Node 1 Phy2 — 502

Phy layer Conversion stage 505

# Fig. 5

| Guard interval | OFDM Symbol n | ••• |
|---|---|---|

T1  Tp  T2

$T_{GI}$

t

# Fig. 6

17

**EP 1 509 002 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5784573 A